# EUROPÄISCHE PATENTANMELDUNG

(11) **EP 1 786 155 A2**
(43) Veröffentlichungstag der Anmeldung: **16.05.2007**
(21) Anmeldenummer: 06120183.6
(22) Anmeldetag: 06.09.2006
(51) Int. Cl.: H04L 12/56

(54) **Überwachungseinheit für ein Funknetzsystem, Funknetzteilnehmersystem, Verfahren zum Optimieren der Informationsgewinnung über Funkverbindungsmöglichkeiten, mobiles Endgerät und SIM-Karte**

(30) Priorität: 10.11.2005 DE 102005053707
(71) Anmelder: SIEMENS AKTIENGESELLSCHAFT, 80333 München (DE)
(72) Erfinder: Mitjana, Enric, 1170, Bruxelles (BE)

(57) **Zusammenfassung**

Zum Optimieren der Informationsgewinnung über Funkverbindungsmöglichkeiten in einem Funknetzteilnehmersystem ist vorgesehen, dass eine Überwachungseinheit (10, 10') Informationen über Funkverbindungsmöglichkeiten (20, 22, 24) gewinnt, sammelt und entsprechende Daten an eine Datenverwaltungsstelle (28) sendet, und dass die Datenverwaltungsstelle (28) die Daten, insbesondere in aufbereiteter Form, an mobile Endteilnehmer (34) in einem Funknetzteilnehmersystem weitergibt. Die Überwachungseinheit kann als gesondertes Gerät ortsfest oder mobil ausgebildet sein. Sie kann auch alternativ ein besonders programmiertes mobiles Endgerät sein.

## Beschreibung

Die Erfindung betrifft eine Überwachungseinheit für ein Funknetzsystem. Sie betrifft auch ein Funknetzteilnehmersystem und ein Verfahren zum Optimieren der Informationsgewinnung über Funkverbindungsmöglichkeiten in einem Funknetzteilnehmersystem. Schließlich betrifft die Erfindung auch ein mobiles Endgerät und eine SIM-Karte für ein mobiles Endgerät.

Die Erfindung befasst sich mit Informationen über Funkverbindungsmöglichkeiten. Funkverbindungsmöglichkeiten umfassen eine verwendete Funkverbindungstechnologie und bei modernen Funkverbindungstechnologien wie etwa WLAN (Wireless Local A-rea Network) das Anbieten eines Netzzugangs durch einen Netzanbieter (WLAN-Provider) zu einem Dienstanbieter. Weitere Technologien, bei denen das Ermitteln von Funkverbindungsmöglichkeiten von Interesse ist, sind WiMAX (Worldwide interoperability for Microwave Access) - also Systeme, die auf dem IEEE802.16-Netz beruhen -, OFDM (Orthogonal Frequence Division Multiplex) und 3GPP2 (Third Generation Partnership Project 2).

Die Funkverbindungsmöglichkeiten können von Ort zu Ort variieren und insbesondere auch von der Zeit abhängig sein. Aus diesem Grunde ermitteln bisher mobile Endgeräte selbst aktuelle Funkverbindungsmöglichkeiten, bevor sie eine von diesen für die Herstellung einer tatsächlichen Verbindung auswählen. Dies gilt unabhängig davon, wie groß die Zahl der mobilen Endgeräte in einem Funknetzteilnehmersystem ist. Insgesamt ist es sehr aufwendig, wenn jedes mobiles Endgerät selbst die aktuellen Funkverbindungsmöglichkeiten jedes Mal neu ermittelt. Im Rahmen eines großen Gesamtsystems erscheint dies unökonomisch.

Es ist Aufgabe der Erfindung, einen Weg aufzuzeigen, wie Informationen über aktuelle Funkverbindungsmöglichkeiten ökonomischer gewonnen werden können.

Die Aufgabe wird durch eine Überwachungseinheit gemäß Patentanspruch 1, ein Funknetzteilnehmersystem gemäß Patentanspruch 16, ein Verfahren gemäß Patentanspruch 21, ein mobiles Endgerät gemäß Patentanspruch 23, und eine SIM-Karte gemäß Patentanspruch 25 gelöst.

Somit stellt die Erfindung eine Überwachungseinheit für ein Funknetzsystem mit einem Funkempfänger und einem Sender, mit einer Steuereinrichtung und einem Speicher bereit, wobei die Steuereinrichtung so ausgelegt ist, dass sie mit Hilfe des Empfängers wiederholt Informationen über aktuelle Funkverbindungsmöglichkeiten ermittelt und in dem Speicher sammelt und ferner dazu ausgelegt ist, die Informationen mit Hilfe des Senders an eine Datenverwaltungsstelle zu übermitteln.

Neu ist daran, dass die Funkverbindungsmöglichkeiten gesammelt werden und an eine andere Stelle, nämlich die (zentrale) Datenverwaltungsstelle übermittelt werden. Die Datenverwaltungsstelle kann dann Informationen aus unterschiedlichen Überwachungseinheiten sammeln, aufbereiten und auf verschiedene Arten und Weisen weitergeben.

Die Überwachungseinheit stellt in aller Regel ein gesondertes Gerät dar, das gemäß einer Alternative von mobilen Endgeräten verschieden ist. Die Überwachungseinheit kann so ausgestaltet sein, dass sie einzig und allein die Aufgabe der Überwachung der Funkverbindungsmöglichkeiten hat. Hierzu kann vorgesehen sein, dass die Steuereinrichtung die Information zu vorbestimmten Zeitpunkten, insbesondere in regelmäßigen Zeitintervallen, an die Datenverwaltungsstelle übermittelt. Dies kann bedeuten, dass die Information jedes Mal, jedes zweite oder jedes dritte Mal etc., wenn sie gesammelt werden, auch übermittelt werden, oder dass eine bestimmte Anzahl von Wiederholungen abgewartet wird, bevor die Daten übermittelt werden. Beispielsweise können die Informationen alle 10 Minuten gesammelt werden und stündlich an die Datenverwaltungsstelle übermittelt werden.

Es kann auch vorgesehen sein, dass die Steuereinrichtung die Information auf Abfrage hin an die Datenverwaltungsstelle übermittelt. Es ist dann Aufgabe der Datenverwaltungsstelle zu entscheiden, wann sie die Informationen für eine eventuelle Aufbereitung und Weitergabe benötigt.

Bevorzugt umfasst die Überwachungseinheit eine Uhr, und zu den Informationen zugehörig wird die Zeit ihrer Ermittlung an die Datenverwaltungsstelle übermittelt (und dementsprechend gegebenenfalls vorher auch in dem Speicher abgelegt). Es kann für die Datenverwaltungsstelle von Interesse sein, auch für die Vergangenheit eine Information über aktuelle Funkverbindungsmöglichkeiten zu erhalten, beispielsweise um mobile Endgeräte kontrollieren zu können dahingehend, ob sie tatsächlich sämtliche Funkverbindungsmöglichkeiten abgeprüft haben und die optimale Funkverbindungsmöglichkeit ausgewählt haben.

Die Zeitinformation ist auch ferner dahingehend relevant, um entscheiden zu können, wie aktuell die jeweiligen Informationen sind.

Die Informationen können mehreres umfassen, was mit Hilfe des Empfängers zu ermitteln ist. Hierzu gehören die Angabe eines Netzidentifikators eines abgefragten Funkverbindungsanbieters, die Signalstärke des Funkverbindungsanbieters (am Ort der Überwachungseinheit) und/oder weitere von dem Funkverbindungsanbieter selbst zur Verfügung gestellte Daten über die Funkverbindungsmöglichkeit. Ferner können zusätzlich oder alternativ Parameter mit einer Aussagekraft über die Qualität einer Verbindung übermittelt werden.

Bei einer ersten, einfachen Alternative ist die Überwachungseinheit dazu ausgelegt, passiv das Vorhandensein von Funkverbindungsmöglichkeiten zu ermitteln, d. h. den Pegel von Signalen zu erfassen, die das Anbieten eines Netzes signalisieren, und eine zugehörige Signalstärke zu messen. Auch bereits diese Information kann für viele Datenabnehmer der Datenverwaltungsstelle (z. B. mobile Endgeräte) hilfreich sein.

Gemäß einer verbesserten Alternative ist das Überwachungsgerät dazu ausgelegt, Funkverbindungsmöglichkeiten zunächst zu ermitteln und dann aktiv eine tatsächliche Verbindung über die Funkverbindungsmöglichkeit herzustellen (durch Wahl einer nach bestimmten Kriterien (gegebenenfalls durch Zufallsgenerator) ausgewählten Telefonnummer). Bei Herstellen einer Funkverbindungsmöglichkeit können zusätzliche Informationen über die Funkverbindungsmöglichkeit gewonnen werden, beispielsweise über die Qualität der Datenübertragung oder die Diensteanbieter, die über diese Funkverbindungsmöglichkeit erreicht werden können; Informationen, die der Anbieter der Funkverbindungsmöglichkeit selbst freiwillig nicht zur Verfügung stellt. Die Überwachungseinheit kann hierzu umfänglich mit Messeinrichtungen ausgerüstet sein.

Die beiden oben genannten Alternativen können dahingehend kombiniert werden, dass wiederholt in kleineren Zeitintervallen passiv das Vorhandensein von Funkverbindungsmöglichkeiten abgefragt wird und hierbei teilweise (d. h. für bestimmte Funkverbindungsmöglichkeiten z. B.) zusätzlich in bestimmten größeren Zeitintervallen aktiv eine tatsächliche Verbindung über die Funkverbindungsmöglichkeiten hergestellt wird.

Die Überwachungseinheit kann mobil sein, beispielsweise an einem Automobil befestigt sein. Sie kann dann eine Positionsermittlungseinheit umfassen und dazu ausgelegt sein, zu den Informationen eine zugehörige Position an die Datenverwaltungsstelle übermitteln. Diese Ausführungsform ist insbesondere dann sinnvoll, wenn großflächig Informationen mit nur einer Überwachungseinheit gewonnen werden sollen, aber davon auszugehen ist, dass sich die Funkverbindungsmöglichkeiten zeitlich nicht sehr ändern.

Alternativ kann vorgesehen sein, dass die Überwachungseinheit ortsfest ist. Beispielsweise kann sie an einer Kreuzung an einer Ampel befestigt sein. Diese Ausführungsform ist insbesondere dann von Vorteil, wenn an einem bestimmten Ort besonders viele mobile Endgeräte verwendet werden, so dass die Informationen bevorzugt von der Überwachungseinheit nur ein einziges Mal gewonnen werden müssen und nicht von den mobilen Endgeräten einzeln nochmals, sondern dass die mobilen Endgeräte diese von der Datenverwaltungsstelle erhalten. Die ortsfeste Ausführungsform der Überwachungseinheit ist insbesondere auch dann sinnvoll, wenn sich die Funkverbindungsmöglichkeiten zeitlich schnell ändern können, dementsprechende Informationen aber auch ständig nachgefragt werden.

Selbstverständlich muss die Überwachungseinheit nicht unbedingt an einer Ampel befestigt sein. Sie kann auch an Elementen und Bauteilen eines Funknetzsystems angeordnet sein. Beispielsweise kann sie lokal an oder bei einer Basisstation eines GSM- oder UMTS-Funknetzsystems angeordnet sein. Unter "an oder bei" ist hierbei zu verstehen, dass nicht unbedingt ein körperlicher Kontakt zwischen der Überwachungseinheit und der Basisstation bestehen muss, aber eine räumliche Nähe, die eine organisatorische Zusammengehörigkeit gewährleistet, gegeben ist. Sie kann alternativ auch an einer Antenne eines GSM-oder UMTS-Funknetzsystems angeordnet sein. Für Antennen werden bestimmte Orte zur Verfügung gestellt, die dann gleichzeitig für die Überwachungseinheit genutzt werden können.

Schließlich kann die Überwachungseinheit auch in irgendeiner Weise Teil einer Ortsmesseinheit sein (LMU, Local Measurement Unit). In einem GSM- und einem UMTS-Funknetzsystem gibt es Ortsmesseinheiten, die aufgrund von Laufzeitunterschieden von Signalen die Orte von mobilen Endgeräten messen können.

Die Überwachungseinheit kann auch ein feststehendes Endgerät umfassen. Beispielsweise kann an der oben genannten Ampel ähnlich wie bei einer Polizeinotrufsäule die Möglichkeit zum Telefonieren bereitgestellt werden. Hierbei kann die Auswahl der anwählbaren Telefonnummern beschränkt sein.

Bei einer bevorzugten Ausführungsform ist die Steuereinheit dazu ausgelegt, Steuerbefehle von der Datenverwaltungsstelle zu erhalten. Diese Steuerbefehle können beispielsweise beinhalten, dass ein bestimmtes Band zu bestimmten Zeitpunkten abgesucht wird, nur ein Teil der Bandbreite abgesucht wird etc. Mit anderen Worten kann die Datenverarbeitungsstelle veranlassen, dass überhaupt Informationen ermittelt und gesammelt werden und auch eine Auswahl vorgeben. Dadurch wird die Position der Datenverwaltungsstelle gestärkt, und die Gewinnung von Informationen erfolgt flexibler.

Bei einer weiteren bevorzugten Ausführungsform hat die Überwachungsstelle mehrere Funkempfänger für unterschiedliche Aufstellorte, die über Funk, Infrarot oder Kabelverbindungen von einer zentralen Steuereinrichtung gesteuert werden. Beispielsweise können in einem Haus in mehreren Räumen verschiedene Funkempfänger vorgesehen sein, die jeweils die Funkverbindungsmöglichkeiten ermitteln, wobei die zentrale Steuereinheit über Bluetooth-Technologie die einzelnen Teilgeräte ansteuert.

Das erfindungsgemäße Funknetzteilnehmersystem umfasst eine Datenverwaltungsstelle, zumindest eine Überwachungseinheit, die wiederholt Informationen über aktuelle Funkverbindungsmöglichkeiten ermittelt, sammelt und weitersenden kann, und mobile Endgeräte.

Bevorzugt sendet die Überwachungseinheit die Informationen an die Datenverwaltungsstelle. Nicht jede Überwachungseinheit muss jedoch so ausgestaltet sein, dass sie die Informationen direkt an die Datenverwaltungsstelle sendet. Es können mehrere Überwachungseinheiten mit zwei Rangstufen vorgesehen sein, wobei rangniedrigere Überwachungseinheiten die Informationen an ranghöhere Überwachungseinheiten senden und die ranghöheren Überwachungseinheiten die Informationen sämtlich an die Datenvermittlungsstelle senden. Grund hierfür kann sein, dass nicht bei jeder Überwachungseinheit ein so hoher Aufwand für den Sender betrieben werden soll. Bei den rangniedrigeren Überwachungseinheiten kann ein kurzreichweitiger Sender genügen, wenn eine ranghöhere Überwachungseinheit in kurzer Reichweite liegt. Diese kann dann eine stärkere Sendeeinheit haben, die an die weiter entfernte Datenverwaltungsstelle senden kann.

Die Kommunikation der Überwachungseinheiten mit der Datenverwaltungsstelle kann auch über feste Leistungen erfolgen.

Auch wenn die Erfindung bereits mit einer Überwachungseinheit funktioniert, kommt der eigentliche Vorteil bei Verwendung mehrerer Überwachungseinheiten zum Tragen. Wenn die Datenverwaltungsstelle die von Überwachungseinheiten ermittelten Informationen zusammen mit einer Identifizierungs- oder Positionsinformation über die Überwachungseinheiten erhält (wobei die Identifizierungsinformation bei einer ortsfesten Überwachungseinheit einer Information über die Position gleichkommt), kann sie eine Karte über die Funkverbindungsmöglichkeiten in Abhängigkeit vom Ort erstellen und an die mobilen Endgeräte senden. Anstelle einer Karte können direkt Befehle zur Suche nach einer bestimmten Funkverbindungsmöglichkeit übermittelt werden oder auch Listen mit Präferenzen für Funkverbindungsmöglichkeiten an die mobilen Engeräte gesandt werden.

Wenn ein mobiles Endgerät eingeschaltet wird, kann in dem Funknetzteilnehmersystem die Position des mobilen Endgeräts ermittelt werden, entweder durch das mobile Endgerät selbst, oder aufgrund von Laufzeitunterschieden von Signalen zwischen verschiedenen Sendestationen des Funknetzteilnehmersystems. Aufgrund der Karte weiß nun das mobile Endgerät, welche Funkverbindungsmöglichkeiten aufgrund der letzten Messung der betreffenden Überwachungseinheit zur Verfügung stehen und kann zielgenau nach bestimmten Funkverbindungsmöglichkeiten suchen. Beispielsweise kann die Datenverwaltungsstelle den mobilen Endgeräten auch vorgeben, welche Funkverbindungsmöglichkeit sie bevorzugen soll. Dies ist insbesondere dann von Interesse, wenn der Dienstanbieter, der die Funktionalität des mobilen Endgeräts zur Verfügung stellt, und mit dem der Teilnehmer in vertraglicher Beziehung steht, von den Netzanbietern verschieden ist, die die tatsächliche Funkverbindung herstellen. Es kann dann nach der vom Tarif her günstigsten Funkverbindung gesucht werden, wobei die Datenverwaltungsstelle entsprechende Steuerbefehle an die mobilen Endgeräte zusammen mit der Karte übermitteln kann.

Die Übermittlung der Karte und von weiteren Informationen durch die Datenverwaltungsstelle an die mobilen Endgeräte kann aufgrund herkömmlicher Point-to-Point-Technologien (d. h. von der Datenverwaltungsstelle an jeweils ein mobiles Endgerät) oder aufgrund von Point-to-Multipoint-Technologien erfolgen (d. h. von der Datenverwaltungsstelle an eine Vielzahl von mobilen Endgeräten gleichzeitig).

Die Datenverwaltungsstelle kann Teil eines ein funknetzanbietenden Systems sein, d. h. es handelt sich dann nicht nur um ein Funknetzteilnehmersystem, sondern um ein Funknetzsystem als Ganzes.

Das erfindungsgemäße Verfahren zum Optimieren der Informationsgewinnung über Funkverbindungsmöglichkeiten in ein Funknetzteilnehmersystem umfasst, dass eine Überwachungseinheit Informationen über Funkverbindungsmöglichkeiten gewinnt, sammelt und an eine Datenverwaltungsstelle sendet, und dass die Datenverwaltungsstelle die Daten (vorzugsweise in aufbereiteter Form) an mobile Endteilnehmer in einem Funknetzteilnehmersystem weitergibt.

Das erfindungsgemäße Verfahren macht seinem Namen Ehre: Die Informationsgewinnung über Funkverbindungsmöglichkeiten wird durch es optimiert.

Bevorzugt sind es mehrere Überwachungseinheiten, die Informationen über Funkverbindungsmöglichkeiten gewinnen, sammeln und für die Datenverwaltungsstelle bereitstellen, wobei die Datenverwaltungsstelle die Aufgabe hat, die gewonnenen Informationen zu einem Informationspaket zusammenzufassen (beispielsweise zu einer Karte) und den mobilen Endteilnehmern das Informationspaket (als Ganzes) zu übermitteln.

Bisher war davon ausgegangen worden, dass die Überwachungseinheit von einem mobilen Endgerät verschieden ist. Es gibt jedoch auch die Alternative, dass ein mobiles Endgerät eine neue Funktionalität erhält, so dass es zu einer Überwachungseinheit mit den Funktionen der oben beschriebenen Überwachungseinheit wird. Ansatzpunkt ist hierbei die SIM-Karte, die das Überwachungsprogramm für das mobile Endgerät bereitstellt. Da mobile Endgeräte bereits jetzt zum Gewinnen von Informationen über Funkverbindungsmöglichkeiten ausgelegt sind, müssen keine zusätzlichen Sender und Empfänger, Steuereinrichtungen oder Speicher bereitgestellt werden. Stattdessen muss die SIM-Karte so programmiert sein, dass das mobile Endgerät wiederholt Informationen über aktuelle Funkverbindungsmöglichkeiten ermittelt, in einem Speicher sammelt und regelmäßig oder auf Abfrage an eine Datenverwaltungsstelle übermittelt. Die Besonderheit liegt hierin in der Wiederholung der Informationsgewinnung, weil im Stand der Technik die Informationsgewinnung lediglich für das Herstellen einer eigenen Verbindung erfolgt. Entsprechend wurden im Stand der Technik die Informationen auch nicht in einem Speicher gesammelt und auch nicht regelmäßig oder auf Abfrage an eine Datenverwaltungsstelle übermittelt.

Bei einer bevorzugten Ausführungsform ist vorgesehen, dass das mobile Endgerät nicht ausschaltbar ist. Es handelt sich somit um ein "besonderes" mobiles Endgerät, die speziell die Aufgabe einer Überwachungseinheit rund um die Uhr wahrnimmt und gewissermaßen "nebenbei" als mobiles Endgerät fungiert. Durch die Nicht-Ausschaltbarkeit des mobilen Endgeräts ist gewährleistet, dass es keine zeitlichen Unterbrechungen bei der Überwachung der aktuellen Funkverbindungsmöglichkeiten gibt.

Die Erfindung stellt auch eine SIM-Karte für ein mobiles Endgerät bereit, die so programmiert ist, dass das mobile Endgerät einen Modus einnimmt oder einnehmen kann, in dem es wiederholt Informationen über aktuelle Funkverbindungsmöglichkeiten ermittelt, in einem Speicher sammelt und regelmäßig oder auf Abfrage an eine Datenverwaltungsstelle übermittelt. Das Programm kann beispielsweise einen Menüpunkt bereitstellen, mit dem der Modus aktivierbar und deaktivierbar ist. Alternativ kann vorgesehen sein, dass der Modus aufgrund eines extern eingehenden Steuerbefehls aktivierbar und deaktivierbar ist. In einem Funknetzteilnehmersystem aus einer Datenverwaltungsstelle, mehreren mobilen normalen Endgeräten und einem mobilen Endgerät mit der erfindungsgemäßen SIM-Karte kann somit die Datenverwaltungsstelle den Modus extern aktivieren und deaktivieren. Das mobile Endgerät mit der erfindungsgemäßen SIM-Karte kann somit auf Anfrage zur Gewinnung von Informationen über aktuelle Funkverbindungsmöglichkeiten für die Datenverwaltungsstelle verwendet werden. In einem solchen System kann es vorkommen, dass dasselbe mobile Endgerät einmal als Überwachungseinheit Informationen für andere mobile Endgeräte gewinnt, und ein andermal Informationen von anderen mobilen Endgeräten passiv verwendet, die es von der Datenverwaltungsstelle erhalten hat. Die Datenverwaltungsstelle kann diese wechselnde Funktionalität steuern.

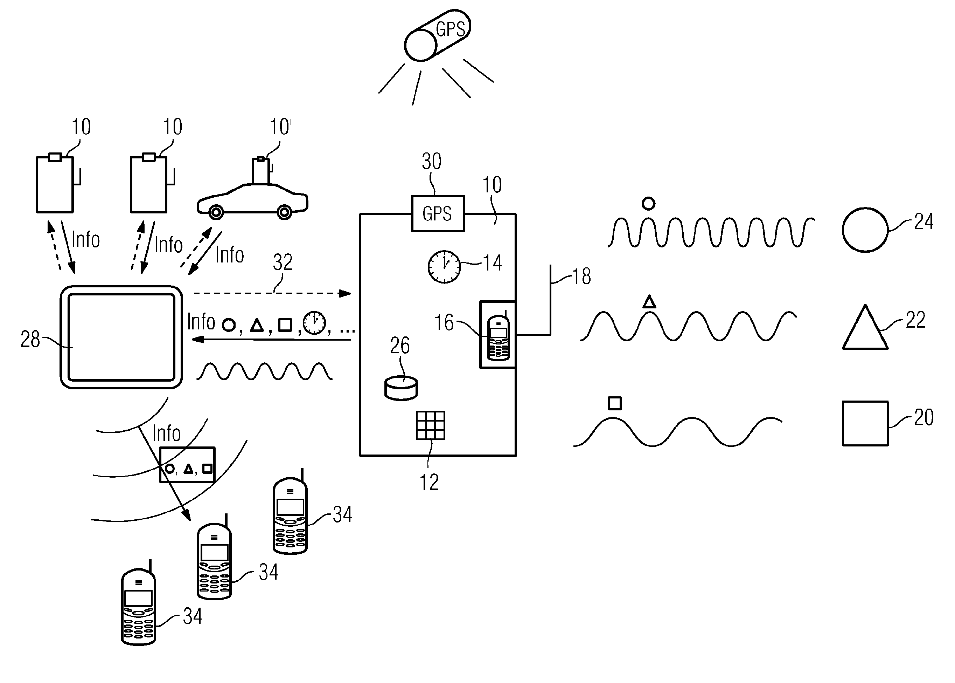

Es wird nun eine bevorzugte Ausführungsform der Erfindung unter Bezug auf die Figur beschrieben, in der: Die Figur schematisch ein beispielhaftes Funknetzteilnehmersystem darstellt.

Die Figur zeigt eine hier als ortsfest gedachte Überwachungseinheit 10, wie sie beispielsweise an einer feststehenden Säule, oder auch an einer Ampel, oder im Eingangsbereich eines Gebäudes angebracht sein kann. Das System umfasst mehrere solcher Überwachungseinheiten 10 und zusätzlich oder alternativ eine mobile Überwachungseinheit 10', welche hier schematisch an einem Kraftfahrzeug angeordnet dargestellt ist (nicht maßstäblich). Die Überwachungseinheit 10 umfasst einen Mikroprozessor 12, eine Uhr 14 und eine Funktionalität als mobiles Endgerät 16 (schematisch veranschaulicht), wobei eine Empfangs- und Sendeantenne 18 gesondert dargestellt ist.

Der Mikroprozessor 12 fungiert als Steuereinheit für die Überwachungseinheit. In regelmäßigen Zeitintervallen steuert die Steuereinheit 12 die Funktionalität 16 so an, dass die aktuell bestehenden Funkverbindungsmöglichkeiten ermittelt werden. Beispielsweise würde die Überwachungseinheit 10 zu einem bestimmten Zeitpunkt feststellen, dass drei verschiedene Netzanbieter 20, 22 und 24 jeweils Netz mit einer bestimmten Frequenz anbieten. Die Netzanbieter 20, 22 und 24 müssen nicht unbedingt das Netz mit derselben Technologie anbieten; beispielsweise können die Netzanbieter 20 und 22 WLAN-Netz bereitstellen und der Netzanbieter 24 ein WiMax-Netz. (Die Antenne 18, die hier nur schematisch gezeichnet ist, soll die Empfangsmöglichkeiten für verschiedene Netztechnologien repräsentieren). Über die Netzanbieter 20, 22 und 24 kann auf unterschiedliche Dienstanbieter zugegriffen werden (nicht in FIG gezeigt). Beispielsweise kann auf einen ersten Dienstanbieter über den Netzanbieter 20 oder 24 zugegriffen werden und auf einen zweiten Dienstanbieter nur über den Netzanbieter 20. Entsprechende Informationen werden nun in einem Speicher 26 gesammelt.

Die Informationen werden zu regelmäßigen Zeitpunkten, entweder nach Beendigung der Informationsgewinnung oder auch nach mehrfacher Informationsgewinnung, an eine Datenverwaltungsstelle 28 übermittelt. Hierbei nutzt die Überwachungseinheit 10 die Funktechnologie. Die Informationen umfassen Informationen über die Netzanbieter 20, 22 und 24, wobei zusätzlich zu der Tatsache, dass das Netz als solches angeboten ist, durch die Funktionalität 16 auch eine Signalstärke gemessen sein kann. Die Informationen umfassen ferner die Uhrzeit der Gewinnung von Informationen sowie weitere Daten. Zu den weiteren Daten kann eine Identitätsnummer der entsprechenden Überwachungseinheit 10 gehören. Zusätzlich oder stattdessen kann eine Information über die Position der Überwachungseinheit 10 gegeben sein. Zum Zwecke der Messung der Position kann die Überwachungseinheit 10 mit einem Positionsmesssensor 30 versehen sein, der Signale von dem Global Positioning System, GPS, erhält, wodurch die geographische Lage bestimmt wird. Bei ortsfester Überwachungseinheit kann es allerdings auch sein, dass der Datenverarbeitungsstelle 28 die Position der Überwachungseinheit 10 als solche bekannt ist und dass bei der Ermittlung Übermittlung der Informationen eine Identifizierung der Überwachungseinheit 10 als solche genügt.

Die Informationen können alles enthalten, was für die Datenverarbeitungsstelle nützlich sein kann. Die Überwachungseinheit 10 muss nun entsprechend ausgerüstet sein. Beispielsweise kann auch vorgesehen sein, dass die Funktionalität 16 dazu ausgenutzt wird, eine tatsächliche Verbindung über einen der Netzanbieter 20, 22 und 24 herzustellen. Es kann dann während laufender Verbindung die Qualität der Übertragung von Signalen ermittelt werden, die erreichbaren Dienstanbieter können ermittelt werden, entsprechende Parameter können bestimmt werden und den Informationen an die Datenverwaltungsstelle 28 beigefügt werden.

Der gestrichelte Pfeil 32 von der Datenverarbeitungsstelle 28 zur Überwachungseinheit 10 veranschaulicht, dass die Datenverarbeitungsstelle gegebenenfalls auch Signale an die Überwachungseinheit 10 senden kann. Dies können Steuersignale sein, die beispielsweise eine Messung auslösen können, unabhängig von der gegenwärtigen Uhrzeit. Es kann auch sein, dass die Information nicht in regelmäßigen Intervallen gesendet werden, sondern nur auf Abfrage. Der Pfeil 32 repräsentiert auch eine solche Abfrage von Daten. In dem in der Figur veranschaulichten System gewinnen und übermitteln insgesamt drei ortsfeste Überwachungseinheiten 10 und eine mobile Überwachungseinheit 10' Informationen über aktuelle Funkverbindungsmöglichkeiten. Den Überwachungseinheiten 10 lässt sich eine Position auf einer Karte (oder einem Stadtplan etc.) zuordnen. Bei der mobilen Überwachungseinheit 10' muss die entsprechende Position jedes Mal aufgrund von Informationen aus dem GPS-System gemessen werden und zusammen mit den Informationen übermittelt werden. Die Datenverwaltungsstelle 28 stellt eine solche Karte zusammen, in der die Informationen den Messorten zugeordnet sind. Die Datenverwaltungsstelle 28 strahlt nun die Informationen per Funk aus an eine Vielzahl von mobilen Endgeräten 34. Dieses mobile Endgerät 34 erhält die Karte mit Informationen. Befindet sich das mobile Endgerät 34 irgendwo im Bereich der Karte, so muss es die Informationen nicht selbst gewinnen, sondern kann auf die Karte zurückgreifen. Es stehen also Funkverbindungsmöglichkeiten zur Verfügung, die beispielsweise auch bei der zeitlich am kürzesten zurückliegenden Messung ermittelt wurden. Das mobile Endgerät muss dann nicht diese aktuellen Funkverbindungsmöglichkeiten einzeln neu abfragen, sondern kann zielgenau eine Funkverbindungsmöglichkeit nutzen.

Die Datenverwaltungsstelle 28 kann von dem Vertragspartner der Benutzer der mobilen Endgeräte 34 bereitgestellt sein, welcher wünscht, dass die mobilen Endgeräte 34 Verbindungen über von ihm bevorzugte Funkverbindungsmöglichkeiten herstellen. Hierdurch können besonders günstige Tarife der Netzanbieter 20, 22 und 24 ausgenutzt werden, und eine Auswahl kann durch die Datenverwaltungsstelle 28 bereits vorgegeben werden (zusammen mit den Informationen aus der Karte an die mobilen Endgeräte übermittelt werden).

Die Erfindung stellt erstmals eine Möglichkeit zur Verfügung, wie auf die zeitaufwendige Suche nach Funkverbindungsmöglichkeiten durch die einzelnen mobilen Endgeräte 34 verzichtet werden kann. Diesen wird eine Information über die Funkverbindungsmöglichkeiten in Abhängigkeit vom Ort von der Datenverwaltungsstelle zur Verfügung gestellt. Diese Information wird von eigens hierfür gedachten Überwachungseinheiten 10 und 10' gewonnen.

Durch die schematische Darstellung der Funktionalität 16 ist bereits angedeutet, dass die Überwachungseinheit 10 auch als mobiles Endgerät ausgestaltet sein kann. Die Elemente 12, 14, 18, 26 und gegebenenfalls 30 können grundsätzlich auch Teil eines mobilen Endgeräts sein und sind dies auch. Gegenüber einem herkömmlichen mobilen Endgerät wäre ein solches mobiles Endgerät jedoch so zu programmieren, dass es wiederholt die Informationen gewinnt, und nicht nur für eigene Zwecke, dass es sie sammelt, und dass es sie an die Datenverwaltungsstelle 28 übermittelt. Naturgemäß wäre eine solche Überwachungseinheit, die als mobiles Endgerät ausgestaltet ist, nicht mehr ortsfest, und es müsste eine Information betreffend die Position zur Verfügung stehen, beispielsweise durch den Positionssensor 30. Ein und dasselbe Endgerät könnte dann einmal zum herkömmlichen Telefonieren oder Herunterladen von Diensten aus dem Netz verwendet werden, und es könnte ein andermal die Funktion einer Überwachungseinheit einnehmen.

Bei der dargestellten Ausführungsform, bei der die Überwachungseinheiten 10 als ortsfest gedacht sind, ist insbesondere vorgesehen, dass die Überwachungseinheiten 10 Teil eines Mobilfunksystems sind, das organisatorisch mit der Datenverwaltungsstelle 28 zusammenhängt, also vom selben Vertragspartner der Benutzer der mobilen Endgeräte 34 bereitgestellt ist. Es kann insbesondere vorgesehen sein, die ortsfesten Überwachungseinheiten auch an einer Antenne eines WLAN, WiMax oder OFDM-Funknetzsystems vorzusehen, oder an einer Basisstation.

Es sei darauf hingewiesen, dass die Erfindung nicht auf die GSM- oder UMTS-Technologie beschränkt ist. Sämtliche aktuellen Netzwerktechnologien sind geeignet, insbesondere kann die Überwachungseinheit wie erwähnt zur Gewinnung von Informationen über aktuelle Funkverbindungsmöglichkeiten betreffend unterschiedliche Netzwerktechnologien verwendet werden.

### Bezugszeichenliste

- 10, 10': Überwachungseinheit
- 12: Mikroprozessor
- 14: Uhr
- 16: Funktionalität eines mobilen Endgeräts
- 18: Sendeantenne
- 20, 22, 24: Netzanbieter
- 26: Speicher
- 28: Datenverwaltungsstelle
- 30: Positionsmesssensor
- 32: Pfeil
- 34: mobile Endgeräte

## Patentansprüche

1. Überwachungseinheit (10, 10') für ein Funknetzsystem mit einem Funkempfänger und einem Sender, mit einer Steuereinrichtung (12) und einem Speicher (26), wobei die Steuereinrichtung (12) so ausgelegt ist, dass sie mit Hilfe des Empfängers wiederholt Informationen über aktuelle Funkverbindungsmöglichkeiten (20, 22, 24) ermittelt und in dem Speicher (26) sammelt und ferner dazu ausgelegt ist, die Informationen mit Hilfe des Senders an eine Datenverwaltungsstelle (28) zu übermitteln.

2. Überwachungseinheit nach Anspruch 1,
**dadurch gekennzeichnet, dass**
die Steuereinrichtung (12) die Information zu vorbestimmten Zeitpunkten, insbesondere in regelmäßigen Zeitintervallen, an die Datenverwaltungsstelle (28) übermittelt.

3. Überwachungseinheit (10, 10') nach Anspruch 1,
**dadurch gekennzeichnet, dass**
die Steuereinrichtung (12) die Informationen auf Abfrage hin an die Datenverwaltungsstelle (28) übermittelt.

4. Überwachungseinheit (10, 10') nach einem der vorhergehenden Ansprüche,
**dadurch gekennzeichnet, dass**
sie eine Uhr (14) umfasst, und zu den Informationen zugehörig die Zeit ihrer Ermittlung an die Datenverwaltungsstelle (28) übermittelt wird.

5. Überwachungseinheit (10, 10') nach einem der vorhergehenden Ansprüche,
**dadurch gekennzeichnet, dass**
Teil der Informationen die Angabe eines Netzidentifikators eines abfragten Funkverbindungsanbieters (20, 22, 24), die Signalstärke des Funkverbindungsanbieters (20, 22, 24) und/oder von dem Funkverbindungsanbieter selbst zur Verfügung gestellte Daten über die Funkverbindungsmöglichkeit sind und/oder Parameter mit einer Aussagekraft über die Qualität einer Verbindung sind.

6. Überwachungseinheit (10, 10') nach einem der vorhergehenden Ansprüche,
**dadurch gekennzeichnet, dass**
sie dazu ausgelegt ist, passiv das Vorhandensein einer Funkverbindungsmöglichkeit zu ermitteln und die zugehörige Signalstärke zu messen.

7. Überwachungseinheit (10, 10') nach einem der Ansprüche 1 bis 5,
**dadurch gekennzeichnet, dass**
die sie dazu ausgelegt ist, zunächst Funkverbindungsmöglichkeiten zu ermitteln und dann aktiv eine tatsächliche Verbindung über die Funkverbindungsmöglichkeit herzustellen und dabei zusätzliche Informationen über die Funkverbindungsmöglichkeit zu gewinnen.

8. Überwachungseinheit (10, 10') nach einem der Ansprüche 1 bis 7,
**dadurch gekennzeichnet, dass**
wiederholt in kleineren Zeitintervallen passiv das Vorhandensein von Funkverbindungsmöglichkeiten abgefragt wird und hierbei teilweise zusätzlich in bestimmten größeren Zeitintervallen aktiv eine tatsächliche Verbindung über die Funkverbindungsmöglichkeiten hergestellt wird.

9. Überwachungseinheit (10') nach einem der Ansprüche 1 bis 8,
**dadurch gekennzeichnet, dass**
sie mobil ist, eine Positionsermittlungseinheit (30) umfasst und dazu ausgelegt ist, zu den Informationen eine zugehörige Position an die Datenverwaltungsstelle (28) zu übermitteln.

10. Überwachungseinheit (10) nach einem der vorhergehenden Ansprüche,
**dadurch gekennzeichnet, dass**
sie ortsfest ist.

11. Überwachungseinheit (10) nach Anspruch 10,
**dadurch gekennzeichnet, dass**
sie an oder lokal bei einer Basisstation eines GSM- oder UMTS-Funknetzsystems angeordnet ist.

12. Überwachungseinheit (10) nach Anspruch 10,
**dadurch gekennzeichnet, dass**
sie an einer Antenne eines GSM- oder UMTS-Funknetzsystems angeordnet ist.

13. Überwachungseinheit (10) nach einem der Ansprüche 10 bis 12,
**dadurch gekennzeichnet, dass**
sie ein feststehendes Endgerät umfasst.

14. Überwachungseinheit (10, 10') nach einem der vorhergehenden Ansprüche,
**dadurch gekennzeichnet, dass**
die Steuereinheit (12) dazu ausgelegt ist, Steuerbefehle von der Datenverwaltungsstelle (28) zu erhalten (32).

15. Überwachungseinheit nach einem der vorhergehenden Ansprüche,
**dadurch gekennzeichnet, dass**
sie mehrere Funkempfänger für unterschiedliche Aufstellorte hat, die über Funk, Infrarot oder Kabelverbindungen von einer zentralen Steuereinheit gesteuert werden.

16. Funknetzteilnehmersystem mit:
- einer Datenverwaltungsstelle (28),
- zumindest einer Überwachungseinheit (10, 10'), die wiederholt Informationen über aktuelle Funkverbindungsmöglichkeiten (20, 22, 24) ermittelt, sammelt und weitersenden kann, und mit
- mobilen Endgeräten (34).

17. Funknetzteilnehmersystem nach Anspruch 16,
**dadurch gekennzeichnet, dass**
die Überwachungseinheit (10, 10') die Information an die Datenverwaltungsstelle (28) sendet.

18. Funknetzteilnehmersystem nach Anspruch 16 oder 17,
**gekennzeichnet durch**
mehrere Überwachungseinheiten mit zwei Rangstufen, wobei rangniedrigere Überwachungseinheiten die Informationen an ranghöhere Überwachungseinheiten senden und die ranghöheren Überwachungseinheiten die Informationen sämtlich an die Datenverwaltungsstelle senden.

19. Funknetzteilnehmersystem nach Anspruch 16 bis 18, **gekennzeichnet durch**
mehrere Überwachungseinheiten, wobei die Datenverwaltungsstelle die von den Überwachungseinheiten ermittelten Informationen zusammen mit einer Identifizierungs- oder Positionsinformation über die Überwachungseinheiten erhält und daraus eine Karte über die Funkverbindungsmöglichkeiten in Abhängigkeit vom Ort erstellt und an die mobilen Endgeräte sendet.

20. Funknetzteilnehmersystem nach Anspruch 16,
**dadurch gekennzeichnet, dass**
die Datenverwaltungsstelle Teil eines ein Funknetz anbietenden Systems ist.

21. Verfahren zum Optimieren der Informationsgewinnung über Funkverbindungsmöglichkeiten in einem Funknetzteilnehmersystem, bei dem
- eine Überwachungseinheit (10, 10') Informationen über Funkverbindungsmöglichkeiten (20, 22, 24) gewinnt, sammelt und entsprechende Daten an eine Datenverwaltungsstelle (28) sendet, und dass
- die Datenverwaltungsstelle (28) die Daten, insbesondere in aufbereiteter Form, an mobile Endteilnehmer (34) in einem Funknetzteilnehmersystem weitergibt.

22. Verfahren nach Anspruch 21,
**dadurch gekennzeichnet, dass**
mehrere Überwachungseinheiten (10, 10') Informationen über Funkverbindungsmöglichkeiten gewinnen, sammeln und für die Datenverwaltungsstelle bereitstellen, und dass die Datenverwaltungsstelle die gewonnenen Informationen zu einem Informationspaket, vorzugsweise zu einer Karte, zusammenfasst und dem mobilen Endteilnehmer das Informationspaket übermittelt.

23. Mobiles Endgerät mit einer SIM-Karte, die so programmiert ist, dass das mobile Endgerät wiederholt Informationen über aktuelle Funkverbindungsmöglichkeiten ermittelt, in einem Speicher sammelt und regelmäßig oder auf Abfrage an eine Datenverwaltungsstelle übermittelt.

24. Mobiles Endgerät nach Anspruch 23,
**dadurch gekennzeichnet, dass**
es nicht ausschaltbar ist.

25. SIM-Karte für ein mobiles Endgerät, die so programmiert ist, dass das mobile Endgerät einen Modus einnimmt oder einnehmen kann, in dem es wiederholt Informationen über aktuelle Funkverbindungsmöglichkeiten ermittelt, in einem Speicher sammelt und regelmäßig oder auf Abfrage an eine Datenverwaltungsstelle übermittelt.

26. SIM-Karte nach Anspruch 25, bei der das Programm einen Menüpunkt bereitstellt, mit dem der Modus aktivierbar und deaktivierbar ist.

27. SIM-Karte nach Anspruch 25, bei der der Modus aufgrund eines externen eingehenden Steuerbefehls aktivierbar und deaktivierbar ist.
